# FASCICULE DE BREVET EUROPEEN

(11) **EP 1 824 664 B1**
(45) Date de publication et mention de la délivrance du brevet: **13.02.2013**
(21) Numéro de dépôt: 05848182.1
(22) Date de dépôt: 16.12.2005
(51) Int. Cl.: B29C 70/54, B29C 70/44

(54) **DENSIFICATION DE STRUCTURES FIBREUSES POUR LA REALISATION DE PIECES EPAISSES EN MATERIAU COMPOSITE**
VERDICHTUNG VON FASERSTRUKTUREN ZUR HERSTELLUNG DICKER TEILE EINES VERBUNDWERKSTOFFES
DENSIFICATION OF FIBROUS STRUCTURES FOR MAKING THICK PARTS OF COMPOSITE MATERIAL

(30) Priorité: 16.12.2004 FR 0413392
(43) Date de publication de la demande: 29.08.2007
(73) Titulaire: HERAKLES, 33185 Le Haillan (FR)
(72) Inventeur: BOUTEFEU, Brigitte, F-33185 Le Haillan (FR); DAUCHIER, Martine, F-33127 Martignas sur Jalles (FR); FAGES, Marie-Laure, F-33380 Lacanau de Mios (FR); CAUCHOIS, Jean-Pierre, F-57500 Saint Avold (FR)
(74) Mandataire: Joly, Jean-Jacques
(86) Numéro de dépôt international: PCT/FR2005/051100
(87) Numéro de publication internationale: WO 2006/064167

(56) Documents cités:
- DE-C1- 19 853 709
- FR-A- 2 771 960
- US-A- 3 975 479
- US-A- 4 942 013
- US-A- 5 942 182
- VAN HARTEN K., NIJHOF A.H. J.: "Resin Transfer Moulding (Eindrapport IOP-PCBP project nr. 5.1)" 1991, TECHNISCHE UNIVERSITEIT DELFT , DELFT , XP002343605 pages V-2 - pages V-10
- AFENDI M ET AL: "Bubble free resin for infusion process" juin 2005 (2005-06), COMPOSITES PART A: APPLIED SCIENCE AND MANUFACTURING, ELSEVIER SCIENCE PUBLISHERS B.V., AMSTERDAM, NL, PAGE(S) 739-746 , XP004812790 ISSN: 1359-835X page 739 - page 746
- "ABRON PR100(SL)"[Online] XP002343595 Extrait de l'Internet: URL:http://www.abrorganics.com/abronPR100S L.htm> [extrait le 2005-09-06]

## Description

### Arrière plan de l'invention

L'invention concerne la réalisation de pièces en matériau composite à renfort fibreux et matrice résine en utilisant un processus d'injection de résine sous pression, ou processus RTM (« Resin Transfer Moulding »).

Le domaine d'application de l'invention est plus particulièrement celui de la réalisation de pièces épaisses en matériau composite. A titre d'exemple de telles pièces épaisses, on peut citer des divergents de tuyères de moteurs-fusées tels que ceux réalisés en matériau composite à renfort en fibres de carbone et matrice en résine phénolique. L'invention est bien sûr applicable à la fabrication d'une grande variété de pièces, qu'il s'agisse de pièces de moteurs-fusées ou de moteurs d'avion, ou de pièces utilisables plus généralement dans les domaines aéronautique et spatial ou autres domaines.

Une technique couramment utilisée pour la réalisation de pièces épaisses en matériau composite consiste à pré-imprégner par une résine des couches ou bandes de tissu ou autre texture fibreuse, à draper ou bobiner les couches ou bandes pré-imprégnées sur une forme et un mandrin, jusqu'à atteindre une épaisseur désirée, puis à recouvrir l'ébauche ainsi obtenue par un film de délaminage, un tissu de drainage de résine et une membrane en élastomère pour permettre la polymérisation de la résine en autoclave et obtenir une pièce ayant sensiblement la forme désirée.

Un tel procédé permet d'obtenir des résultats techniques satisfaisants pour certaines applications visées, à savoir une faible porosité résiduelle et un taux de fibres de renfort assez élevé. Toutefois, la mise en oeuvre industrielle du procédé présente des inconvénients : réalisation en plusieurs étapes successives d'imprégnation par la résine et de polymérisation en autoclave après drapage ou bobinage. Cette opération d'imprégnation par passage dans des bains implique l'utilisation de solvants et un traitement particulier des effluents car ceux-ci posent des problèmes d'environnement, d'hygiène et de sécurité.

On connaît aussi depuis longtemps le procédé RTM qui est largement utilisé et permet d'enchaîner les étapes d'imprégnation d'un renfort fibreux dans un moule par injection de résine et de polymérisation en autoclave, sans mise à l'air libre du renfort fibreux imprégné.

Toutefois, si l'on met en oeuvre le procédé RTM classique sur un renfort fibreux de forte épaisseur, il est difficile d'obtenir des pièces en matériau composite avec une faible porosité résiduelle. En effet, l'imprégnation à coeur d'un renfort fibreux épais par la résine requiert une faible viscosité de celle-ci. L'abaissement de la viscosité par l'utilisation de solvants et l'utilisation de résines dont la polymérisation s'accompagne du dégagement de matières volatiles, comme c'est le cas notamment pour les résines phénoliques, font qu'une porosité résiduelle importante est présente dans le matériau composite après polymérisation de la résine. Une réduction de la porosité est certes possible en répétant plusieurs fois le cycle imprégnation-polymérisation, mais au prix d'une durée et d'un coût de traitement sensiblement accrus.

Un procédé de type RTM est décrit dans le document DE 198 53 709 C1 visant notamment à réduire les inclusions gazeuses dans un renfort fibreux imprégné par une résine et qui décrit un procédé selon le préambule de la revendication 1.

### Objet et résumé de l'invention

L'invention a pour but de proposer un procédé de réalisation de pièces en matériau composite à renfort fibreux et matrice résine permettant d'obtenir des pièces épaisses, avec une faible porosité, sans présenter les inconvénients précités des procédés de l'art antérieur utilisant des pré-imprégnés ou un processus RTM classique.

Ce but est atteint grâce à un procédé pour la réalisation de pièce épaisse en matériau composite à renfort fibreux et matrice résine tel que défini par la revendication 1.

Par pièce épaisse, on entend ici une pièce ayant une épaisseur au moins égale à 5 cm.

La structure fibreuse peut être de type unidirectionnel (1D) par exemple formée par bobinage d'un fil ou câble, de type bidimensionnel (2D), par exemple formée par drapage de strates fibreuses, ou tridimensionnel (3D), par exemple formée par tissage, tressage ou tricotage 3D ou par superposition et liaison entre elles de strates fibreuses.

Dans ce dernier cas, les strates fibreuses peuvent être liées entre elles « mécaniquement » par des éléments s'étendant à travers les strates. Cela peut être obtenu par aiguilletage avec déplacement de fibres hors du plan des strates, par implantation de fils ou éléments rigides (aiguilles ou tiges) à travers les strates ou encore par couture. La structure fibreuse constitue alors une préforme de la pièce à réaliser, laquelle préforme peut être manipulée tout en conservant sa cohésion, sans toutefois être rigide.

En variante, une liaison entre strates fibreuses constitutives de la structure fibreuse 3D peut être obtenue par un agent de liaison tel qu'un liant organique ou minéral qui réalise non seulement une liaison entre strates, mais aussi une rigidification de la structure fibreuse.

On notera que dans le cas de structures fibreuses 3D constituant des préformes fibreuses non rigides, une rigidification pourra être réalisée par consolidation par densification partielle des préformes.

Dans le cas d'une structure fibreuse non rigide (structure 1D, 2D ou 3D non rigidifiée), on réalise avantageusement un compactage de la structure fibreuse. Ce compactage pourra être réalisé au moins en partie par l'intermédiaire de la membrane souple lors de la polymérisation sous pression.

Dans le cas d'une structure fibreuse rigide, avantageusement, on dispose un drain entre la structure fibreuse et la membrane souple, et on force de la résine contenue dans le drain à pénétrer dans la structure fibreuse lors de la polymérisation finale sous pression.

Dans les deux cas, grâce à l'association de la présence d'une membrane souple comme paroi du moule et de la polymérisation sous pression, une réduction de porosité du matériau composite est alors obtenue.

On peut utiliser un moule comprenant une partie support rigide ayant une surface correspondant au profil d'une surface de la pièce à réaliser et contre laquelle est appliquée la structure fibreuse.

Selon une particularité du procédé, on peut réaliser un traitement de pré-distillation de la composition de résine avant son injection dans le moule pour abaisser le taux massique de matières volatiles dans celle-ci à une valeur inférieure à 25%.

La résine utilisée est une résine à polycondensation, telle qu'une résine phénolique, notamment de type résol, ou une résine furanique. Des charges solides sous forme finement divisée peuvent être ajoutées à la résine.

Conformément à l'invention, l'étape de polymérisation comprend une phase initiale au cours de laquelle la température est portée à une première valeur et une dépression est établie dans le moule pour évacuer des matières volatiles produites et une phase finale au cours de laquelle la température est élevée progressivement à partir de la première valeur et la pression est élevée dans l'enceinte pour appliquer à la structure fibreuse imprégnée une pression de préférence supérieure à 1 MPa, par exemple comprise entre 1 MPa et 2,5 MPa.

Ainsi, le procédé selon l'invention est remarquable en ce qu'il constitue une adaptation du procédé RTM spécifiquement pour la réalisation de pièces épaisses à faible porosité.

### Brève description des dessins

L'invention sera mieux comprise à la lecture de la description faite ci-après en référence aux dessins annexés dans lesquels :
- la figure 1 montre les étapes successives d'un mode de mise en oeuvre d'un procédé conforme à l'invention ;
- la figure 2 est une vue très schématique d'ensemble d'une installation permettant la mise en oeuvre d'un procédé selon l'invention ;
- les figures 3 et 4 sont des vues schématiques de modes de réalisation d'un moule pour la réalisation d'un divergent de tuyère de moteur-fusée à partir d'une préforme fibreuse non rigide ;
- la figure 5 est une vue schématique d'un mode de réalisation d'un moule pour la réalisation d'un divergent de tuyère de moteur-fusée à partir d'une préforme fibreuse consolidée rigide ; et
- la figure 6 montre un exemple de l'évolution de la pression et de la température lors de l'étape de polymérisation de la résine selon un mode particulier de mise en oeuvre du procédé conforme à l'invention.

### Description détaillée de modes de réalisation de l'invention

Une première étape 10 du procédé consiste à élaborer une structure fibreuse destinée à constituer le renfort d'une pièce en matériau composite à réaliser. Cette structure fibreuse peut être sous forme d'une préforme fibreuse tridimensionnelle, ou 3D, ayant une forme correspondant à celle de la pièce à réaliser et présentant en elle-même une cohésion lui permettant d'être manipulée sans perdre sa cohésion. De façon bien connue, une telle préforme fibreuse 3D peut être un feutre ou être obtenue par tissage, tricotage ou tressage tridimensionnels, ou par superposition et liaison entre elles de strates bidimensionnelles, ou 2D. Les strates 2D peuvent être formées de tissu, ou de nappes unidirectionnelles (UD), ou de nappes multidirectionnelles constituées de plusieurs nappes UD superposées dans des directions différentes et liées entre elles. La liaison entre strates 2D peut être réalisée par aiguilletage, couture ou encore insertion de fils ou d'éléments rigides à travers les strates.

On pourra par exemple se référer aux documents US 4 790 052 et US 5 226 217 qui décrivent la réalisation de structures fibreuses 3D de différentes formes possibles.

Il est possible également d'utiliser une préforme fibreuse 3D rigidifiée pouvant être manipulée en conservant sa forme sous l'aide d'outillage de maintien. Une telle préforme peut être obtenue par consolidation d'une préforme fibreuse 3D non rigide par dépôt au sein de la préforme fibreuse d'un matériau en quantité juste suffisante pour lier les fibres de la préforme entre elles, c'est-à-dire par une pré-densification de la préforme. Cela peut être réalisé par infiltration chimique en phase vapeur ou CVI (« Chemical Vapor Infiltration ») ou par voie liquide, c'est-à-dire par imprégnation de la préforme par un précurseur liquide du matériau de consolidation, par exemple une résine, et transformation du précurseur par traitement thermique, la préforme fibreuse étant maintenue dans un outillage.

Une préforme fibreuse 3D rigide peut aussi être obtenue par superposition de strates 2D avec liaison des strates entre elles par un liant organique (résine) ou minéral.

Comme déjà indiqué, on pourra aussi utiliser des structures fibreuses 1D, par exemple obtenues par simple bobinage d'un fil, câble ou ruban, ou des structures fibreuses 2D, par exemple obtenues par simple drapage de strates 2D.

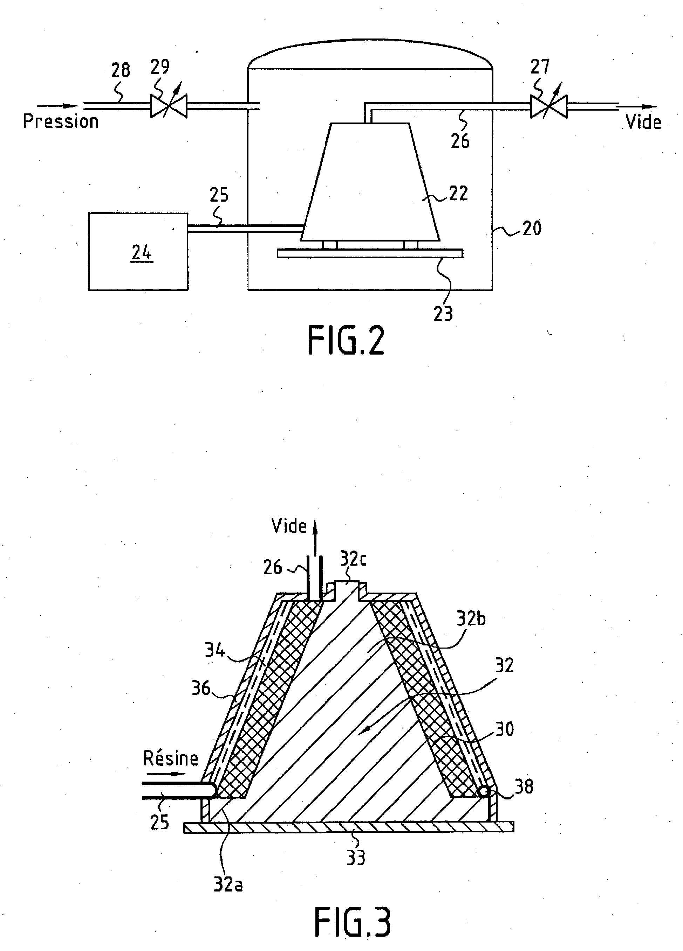

Une deuxième étape 11 du procédé consiste à placer la structure fibreuse dans un moule d'une installation de densification telle que par exemple celle illustrée par la figure 2.

Cette installation comprend une enceinte 20 formant autoclave à l'intérieur de laquelle le moule 22 renfermant la structure fibreuse est disposé sur un plateau 23. Des modes de réalisation du moule 22 seront décrits plus loin en référence aux figures 2 et 3.

Une composition de résine est introduite dans le moule à partir d'un système d'injection 24 et d'une conduite 25 reliant le système d'injection au moule 22, par exemple à la base de celui-ci. Le système d'injection 24 comprend un réservoir et des moyens de chauffage et pressurisation éventuelle de la résine.

Une conduite 26 relie le moule 22, par exemple à la partie supérieure de celui-ci, à une source de vide (non représentée). Une vanne 27 montée sur la conduite 26 permet d'établir ou d'interrompre une dépression dans le moule 12.

En outre, une conduite 28 relie l'autoclave 20 à une source de gaz, par exemple d'azote, sous pression (non représentée). Un ensemble 29 de vanne et régulateur de pression est monté sur la conduite 28 pour permettre d'établir ou d'interrompre une surpression de valeur souhaitée dans l'autoclave 20.

L'autoclave 20 est en outre classiquement munie de moyens de chauffage par exemple de type résistif associés à des moyens de régulation de température (non représentés).

Dans l'installation de la figure 2, la résine est introduite à la base du moule et progresse vers le haut sous l'action de la dépression établie dans le moule par liaison à la source de vide complétée éventuellement par une surpression d'arrivée de la résine. Bien entendu, d'autres dispositions sont possibles, en inversant la circulation de la résine dans le moule ou en injectant la résine à différents niveaux du moule, notamment lorsque la pièce à réaliser est de grandes dimensions.

Des moules convenant pour des structures fibreuses annulaires sont illustrés par les figures 3 à 5, dans le cas par exemple de la réalisation d'un divergent de tuyère de moteur-fusée. La structure fibreuse est alors de préférence une préforme 3D en fibres de carbone formée de strates fibreuses (tissu ou nappes) superposées et liées entre elles par aiguilletage. La préforme présente une forme annulaire de révolution, tronconique, ou à profil incurvé en « coquetier ». Ses dimensions varient selon celles du divergent à réaliser. L'épaisseur de la préforme dépasse 5 cm et peut atteindre 15 cm ou même plus.

Bien entendu, les formes des structures fibreuses et des moules seront à chaque fois adaptées aux formes des pièces à réaliser.

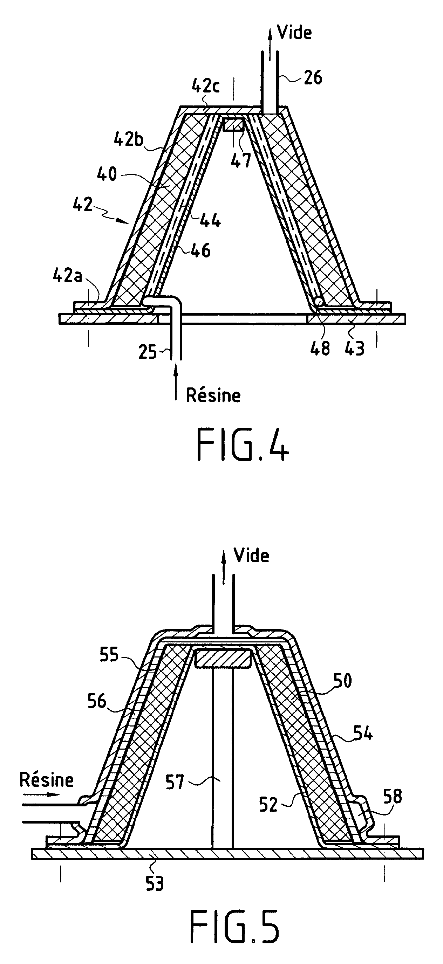

Les moules des figures 3 et 4 conviennent pour une préforme fibreuse non pré-densifiée, donc non rigidifiée, ou préforme « sèche ».

Le moule de la figure 3 comprend une pièce ou outillage de maintien 32 avec une embase 32a reposant sur un support 33 et de laquelle fait saillie un noyau 32b ayant une surface externe sensiblement tronconique dont le profil correspond à celui de la surface définissant la veine d'écoulement de gaz dans le divergent de tuyère à réaliser.

La préforme 30 du divergent à réaliser, ayant sensiblement une forme annulaire, est placée sur le noyau 32b en reposant à une extrémité axiale sur l'embase 32a.

Un drain 34 de diffusion de résine est disposé sur la surface extérieure de la préforme 30, le drain 34 étant par exemple sous forme de grille. L'ensemble est recouvert par une membrane étanche souple 36 en élastomère, par exemple en silicone. L'enveloppe 36 est fixée de façon étanche par des colliers de serrage autour de l'embase 32a et d'un prolongement 32c du noyau 32b à sa partie supérieure.

Les conduites 25 et 26 se raccordent de façon étanche à des ouvertures formées dans la membrane 36 au niveau des parties inférieure et supérieure du noyau 32a, respectivement.

Un canal 38 de diffusion de résine s'étend autour de la partie inférieure de la préforme 30 et est alimenté en résine par la conduite 25. Le canal 38 est par exemple constitué par une tubulure percée.

La résine introduite par la conduite 25 se répartit autour de la partie inférieure de la préforme par le canal 38, progresse par le drain de diffusion 34 et pénètre dans la préforme 30 à travers celui-ci. L'excès de résine est prélevé par la conduite de mise sous vide 26 qui se raccorde à un orifice formé dans la membrane 36 au niveau de la partie supérieure de l'outillage 32.

La figure 4 montre un moule comprenant un outillage 42 de maintien rigide de forme femelle, à la différence de celui de la figure 3. Cet outillage comprend une partie tronconique 42b fermée à son extrémité ou sommet 42c de plus petit diamètre et muni d'une collerette 42a à son autre extrémité ouverte. La face interne de l'outillage correspond au profil souhaité pour la surface extérieure d'un divergent à réaliser.

La préforme 40 du divergent est placée contre la surface interne de la partie tronconique 42b de l'outillage. Un drain 44 de diffusion de résine est disposé sur la surface intérieure de la préforme 40, le drain étant par exemple sous forme d'une grille. Une membrane étanche souple 46 recouvre le drain 44, la membrane étant en élastomère, par exemple en silicone. La membrane s'étend de façon continue sur toute la surface interne de l'ensemble formé par l'outillage 42. A sa périphérie, elle est maintenue serrée de façon étanche entre la collerette 42a et un support 43. Dans sa partie centrale, elle est maintenue serrée de façon étanche entre le sommet 42c de l'outillage et une pièce d'appui 47.

Un canal 48 de diffusion de résine s'étend le long de la partie inférieure de la préforme 40 et est alimenté, depuis l'intérieur, par la conduite 25. Le canal 48 est par exemple formé par une tubulure percée.

La résine introduite par la conduite 25 se répartit autour de la partie inférieure de la préforme, progresse par le drain de diffusion 44 et pénètre dans la préforme 40 à travers celui-ci. L'excès de résine est prélevé par la conduite de mise sous vide 26 qui se raccorde à un orifice formé dans le sommet 42c de l'outillage.

Un moule convenant pour une préforme fibreuse 3D rigide consolidée est illustré par la figure 5. La préforme peut être consolidée par dépôt de carbone pyrolytique (PyC) par CVI liant les fibres entre elles, les processus CVI de dépôt de PyC étant bien connus.

La préforme fibreuse consolidée 50 est enfermée de façon étanche entre des membranes intérieure et extérieure 52, 54, et repose sur un support 53. On utilise des membranes étanches, en élastomère, par exemple en silicone et on interpose entre la préforme 50 et au moins la membrane extérieure 54 une strate de délaminage 55 et un tissu de drainage 56.

Comme le montre la figure 5, les membranes 52, 54 sont appliquées l'une sur l'autre de façon étanche au niveau du support 53 et une tige 57 portée par le plateau maintient la membrane intérieure 52 appliquée contre la surface intérieure de la préforme 50.

Un canal 58 de diffusion de résine est formé autour de la partie inférieure de la préforme 50, sous la membrane 54, et est relié de façon étanche à la conduite 25. La résine introduite par la conduite 25 pénètre dans la préforme à travers le tissu de drainage 56 et la strate de délaminage 55. Un excès de résine est retenu par le tissu 56 et par la canalisation 26. La strate de délaminage 55 facilite le démoulage après polymérisation de la résine.

Après mise en place de la structure fibreuse dans l'enceinte 20, l'étape suivante 12 consiste à préparer la résine à injecter dans le moule 22.

Le procédé selon l'invention convient particulièrement pour la réalisation de pièces en matériau composite à matrice en résine à polycondensation, en particulier en résine phénolique à polycondensation. On utilise notamment une résine phénolique de type résol. Les résines phénoliques habituellement employées pour des processus RTM ont une faible viscosité. Aussi, elles sont fournies avec un taux de solvant élevé qui se retrouve dans le taux massique de matières volatiles, lequel est relativement important, couramment de l'ordre de 40%. Lors de la polymérisation, ces matières volatiles génèrent une porosité assez importante, environ 15%.

Aussi, selon une particularité de l'invention, on injecte une résine ayant un taux massique de matières volatiles relativement faible, inférieur à 25%, de préférence inférieur à 20%. Par matières volatiles, on entend ici le solvant associé à la résine et les autres matières évacuées sous forme gazeuse pendant le cycle de polymérisation.

Selon le taux de matières volatiles présent dans la composition de résine disponible, une opération de pré-traitement peut être nécessaire afin d'abaisser ce taux. Un tel pré-traitement consiste en une pré-distillation sous vide en maintenant la résine à une température modérée. La température est choisie à un niveau suffisant pour réaliser la pré-distillation, mais sans déclencher une polymérisation de la résine nuisible à son injection dans la préforme fibreuse à densifier. Dans le cas de résines phénoliques, notamment de type résol, cette température est choisie par exemple entre 60°C et 90°C.

Afin de conférer à la composition de résine une viscosité suffisamment faible pour permettre l'imprégnation à coeur des préformes fibreuses épaisses à densifier, il peut être nécessaire de chauffer la résine pour élever sa température jusqu'au niveau requis pour atteindre la viscosité voulue. D'une façon générale, cette viscosité doit être comprise entre 0,1 Pa.s et 0,3 Pa.s, de préférence entre 0,1 Pa.s et 0,15 Pa.s. Dans le cas de résines phénoliques de type résol ayant un taux de matières volatiles inférieur à 25%, la température doit de préférence être comprise entre 65°C et 85°C, étant bien entendu que la température ne doit pas dépasser un seuil au-delà duquel l'augmentation de la viscosité de la résine ne permet plus l'injection.

La résine ayant le taux de matières volatiles et la viscosité souhaitée est injectée dans le moule 22 (étape 13) au moyen du système d'injection 24 qui est adapté pour délivrer la composition de résine à la température voulue et éventuellement sous pression, par exemple une pression pouvant aller jusqu'à 3 kPa. Dans le même temps, le volume interne du moule est mis sous vide par ouverture de la vanne 27. Une contre-pression peut être établie dans l'autoclave 20 par la conduite 28 pour équilibrer la pression entre l'intérieur et l'extérieur du moule et éviter un gonflement de la ou des membranes de celui-ci.

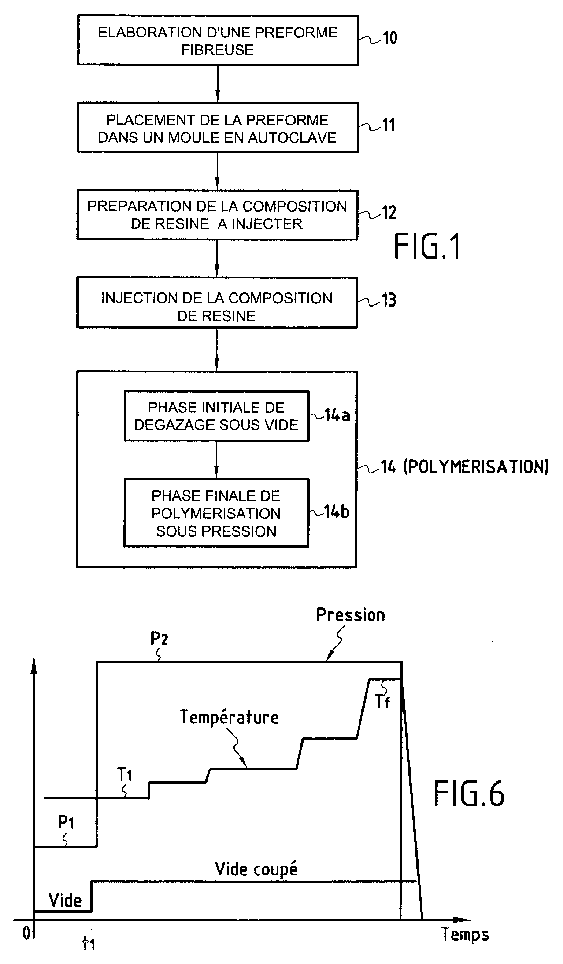

Après injection de la résine, une étape de polymérisation dans le moule 22 est mise en oeuvre (étape 14). La figure 6 montre un exemple de variations de température et de pression dans le moule et l'autoclave pendant le cycle de polymérisation. Avantageusement, l'étape de polymérisation comprend une phase initiale 14a au cours de laquelle la température T dans l'autoclave 20 est élevée jusqu'à un palier T₁ et y est maintenue, et le moule 22 est maintenu sous vide par ouverture de la vanne 27, la pression P₁ dans l'autoclave 20 pouvant être maintenue égale à la pression environnante ou égale à la contre-pression établie lors de l'injection. La température est portée à une valeur T₁ suffisante pour favoriser le dégazage de la résine, c'est-à-dire l'évacuation de matières volatiles contenues dans la résine, tout en maintenant celle-ci suffisamment fluide pour qu'elle puisse encore s'écouler dans la préforme fibreuse et combler la porosité au fur et à mesure de l'évacuation de matières volatiles par la conduite 26. Dans le cas de résines phénoliques de type résol, cette température T₁ est comprise de préférence entre 65°C et 85°C. La durée t₁ de la phase initiale de dégazage sous vide du cycle de polymérisation est choisie pour permettre une évacuation de matières volatiles suffisante pour obtenir, après polymérisation, un niveau de porosité résiduelle dans la matrice résine souhaitée. Cette durée t₁ peut avoir une durée de plusieurs heures à plusieurs dizaines d'heures.

Ensuite, une phase finale 14b de polymérisation sous pression est réalisée. A cet effet, la mise sous vide du moule 22 est interrompue par l'arrêt du vide puis, l'autoclave 20 est mis sous pression et la température dans l'autoclave est élevée progressivement et par paliers jusqu'à une température finale de polymérisation T_{f}.

La pression P₂ dans l'autoclave est portée à une valeur relativement élevée, de préférence supérieure à 1 MPa, par exemple comprise entre 1 MPa et 2,5 MPa. Sous l'effet de la pression, la composition de résine flue à l'intérieur de la porosité résiduelle de la structure fibreuse.

Dans le cas d'une structure fibreuse non rigide, la pression dans l'autoclave provoque une compression de la structure fibreuse, permettant ainsi d'obtenir une pièce en matériau composite ayant non seulement une porosité réduite, mais aussi un taux volumique de fibres augmenté par rapport à celui de la structure fibreuse, le taux volumique de fibres étant la fraction occupée par les fibres du volume apparent de la structure fibreuse ou de la pièce.

On notera que la structure fibreuse non rigide pourra aussi être compactée ou pré-compactée à un stade antérieur à celui de la polymérisation sous pression.

Dans le cas d'une structure fibreuse rigide, la pression dans l'autoclave permet de faire fluer à l'intérieur de la structure fibreuse la composition de résine stockée par le tissu de drainage du moule, réduisant ainsi la porosité.

La température T_{f} dépend du type de composition de résine utilisé. Ainsi, dans le cas de résines phénoliques de type résol, la température T_{f} est de préférence supérieure à 160°C.

La polymérisation terminée, le chauffage de l'autoclave est interrompu et la pression dans l'autoclave est ramenée à la pression atmosphérique.

Afin de faciliter le comblement de la porosité de la structure fibreuse et réduire la porosité résiduelle de la pièce en matériau composite, on pourra utiliser une composition de résine comprenant des charges solides. Celles-ci doivent être sous forme divisée et en quantité limitée pour ne pas pénaliser l'injection au coeur de la structure fibreuse. Ainsi, le pourcentage massique de charges solides doit être de préférence inférieur à 10%. A titre d'exemple, on pourra utiliser du noir de carbone.

Bien que l'on ait envisagé l'utilisation de fibres de carbone pour la structure fibreuse, il apparaît immédiatement que des fibres d'autre nature peuvent être utilisées, telles que des fibres organiques ou inorganiques, par exemple en verre ou en céramique (silice, alumine,...).

En outre, l'utilisation de résine à polycondensation autre que phénolique est possible dès lors que les étapes de préparation de la composition de résine, d'injection dans le moule et de polymérisation peuvent être mises en oeuvre de façon similaire à ce qui est décrit ci-avant. Ainsi, on pourra envisager d'utiliser des résines de type furanique.

Des essais ont été effectués sur des échantillons de préformes fibreuses 3D « sèches » constituées par des strates de tissu en fibres de carbone superposées sur un mandrin et liées entre elles par aiguilletage pour constituer des préformes fibreuses de forme sensiblement tronconique pouvant atteindre une longueur axiale de 110 cm et un diamètre extérieur de 200 cm.

On a utilisé une composition de résine phénolique de type résol pré-distillée pour présenter un taux massique de matières volatiles d'environ 20%. L'injection de la composition de résine a été réalisée à une température d'environ 85°C sous une pression de 0,2 MPa, avec établissement du vide dans le moule.

Le cycle de polymérisation a comporté une phase initiale de durée t₁ à une température de 65°C à 85°C avec mise sous vide du moule et sans surpression dans l'autoclave et une phase finale sous une pression de 1 MPa à 2,5 MPa dans l'autoclave en élevant la température par palier jusqu'à environ 160°C.

Pour des valeurs de t₁ allant de plusieurs heures à plusieurs dizaines d'heures, on a observé sur les diverses pièces densifiées obtenues :
- une variation de la densité entre 1,35 à 1,43 ;
- une variation de porosité résiduelle ouverte entre 5,9% et 10% ;
- une variation du taux de compactage entre 8% et 37%, le taux de compactage étant la diminution relative en volume entre la pièce obtenue et la préforme fibreuse ; et
- une variation du taux de fibres entre 38% et 54%.

Ces essais confirment la possibilité, grâce au procédé selon l'invention, de densifier des textures fibreuses épaisses par un procédé de type RTM tout en obtenant une porosité résiduelle réduite, inférieure à 11% et avec possibilité, dans le cas de textures fibreuses « sèches », d'atteindre un taux de fibres assez élevé.

On note aussi que le choix d'une durée t₁ élevée, de plusieurs dizaines d'heures, permet d'obtenir une porosité résiduelle faible mais réduit la capacité de compactage et d'augmentation du taux de fibres du fait de la plus grande viscosité de la résine à la fin de la phase initiale de l'étape de polymérisation.

Bien entendu, des pièces de plus grandes dimensions que celles des pièces réalisées lors des essais précités pourront être fabriquées.

## Revendications

1. Procédé pour la réalisation de pièce épaisse en matériau composite à renfort fibreux et matrice résine comportant les étapes de :
- fourniture d'une structure fibreuse (30 ;40 ;50) destinée à former le renfort de la pièce à réaliser,
- disposition de la structure fibreuse dans un moule (22) dont au moins une paroi est formée par une membrane souple (36 ;46 ;52, 54),
- injection dans le moule d'une composition de résine, et
- polymérisation de la résine dans le moule placé dans une enceinte (20),
**caractérisé en ce que** :
- on injecte dans le moule (22) une composition de résine ayant un taux massique de matières volatiles inférieur à 25% et une température d'une valeur telle que sa viscosité est comprise entre 0,1 Pa.s et 0,3 Pa.s, et
- l'étape de polymérisation comprend une phase initiale au cours de laquelle la température est portée à une première valeur et une dépression est établie dans le moule (22) pour évacuer des matières volatiles produites et une phase finale au cours de laquelle la température est élevée progressivement à partir de la première valeur et la pression est élevée dans l'enceinte (20) pour obtenir une pièce en matériau composite présentant une porosité volumique résiduelle inférieure à 11%.

2. Procédé selon la revendication 1, dans lequel on utilise une structure fibreuse comprenant des strates bidimensionnelles superposées et liées entre elles.

3. Procédé selon la revendication 2, dans lequel les strates fibreuses bidimensionnelles sont liées entre elles par des éléments s'étendant à travers les strates.

4. Procédé selon la revendication 2, dans lequel les strates fibreuses bidimensionnelles sont liées entre elles par un liant organique ou minéral.

5. Procédé selon l'une quelconque des revendications 1 à 3, dans lequel on utilise une structure fibreuse (30 ;40) non rigide et on réalise un compactage de la structure fibreuse.

6. Procédé selon la revendication 5, **caractérisé en ce que** le compactage est réalisé au moins en partie par l'intermédiaire de la membrane souple (36 ;46) lors de la polymérisation finale sous pression.

7. Procédé selon l'une quelconque des revendications 1 à 4, dans lequel on utilise une structure fibreuse rigide (50), on dispose un drain (56) entre la structure fibreuse et la membrane souple (54), et on force de la résine contenue dans le drain à pénétrer dans la structure fibreuse lors de la polymérisation finale sous pression.

8. Procédé selon la revendication 7, dans lequel on utilise une structure fibreuse (50) rigidifiée par consolidation par densification partielle.

9. Procédé selon l'une quelconque des revendications 1 à 8, dans lequel on utilise un moule comprenant une partie support rigide (32 ;42) ayant une surface correspondant au profil d'une surface de la pièce à réaliser et contre laquelle est appliquée la structure fibreuse.

10. Procédé selon l'une quelconque des revendications 1 à 9, dans lequel on réalise un traitement de pré-distillation de la composition de résine avant son injection dans le moule (22) pour abaisser le taux massique de matières volatiles de celle-ci à une valeur inférieure à 25%.

11. Procédé selon l'une quelconque des revendications 1 à 10, dans lequel on utilise une résine choisie parmi les résines phénoliques et furaniques.

12. Procédé selon l'une quelconque des revendications 1 à 11, dans lequel la composition de résine contient en outre des charges solides.

13. Procédé selon l'une quelconque des revendications 1 à 12, dans lequel, lors de la phase finale de l'étape de polymérisation, la pression est élevée dans l'enceinte (20) pour appliquer à la structure fibreuse imprégnée une pression comprise entre 1 MPa et 2,5 MPa.

## Claims

1. A method of making a thick part out of composite material comprising fiber reinforcement and a resin matrix, the method comprising the steps of:
• providing a fiber structure (30 ; 40 ; 50) that is to form the reinforcement of the part to be made, placing the fiber structure in a mold (22) having at least one wall that is formed by a flexible membrane (36 ; 46 ; 52,54) ;
• injecting into the mold a resin composition, and
• polymerizing the resin in the mold placed in an enclosure (20),
**characterized in that**:
• a resin composition is injected in the mold (22) having a volatile material content of less than 25% by weight and a temperature of a value such that its viscosity lies in the range 0.1 Pa.s to 0.3 Pa.s; and
• the polymerization step includes an initial stage during which the temperature is raised to a first value and suction is established in the mold to evacuate the volatile materials that are produced, and a final stage during which the temperature is raised progressively from the first value and the pressure in the enclosure (20) is raised in order to obtain a composite material part presenting residual porosity of less than 11% by volume.

2. A method according to claim 1, in which a fiber structure is used comprising two-dimensional plies that are superposed and bonded to one another.

3. A method according to claim 2, in which the two-dimensional fiber plies are bonded to one another by elements extending through the plies.

4. A method according to claim 2, in which the two-dimensional fiber plies are bonded to one another by an organic or an inorganic binder.

5. A method according to any one of claims 1 to 3, in which a non-rigid fiber structure (30 ; 40) is used and the fiber structure is compacted.

6. A method according to claim 5, **characterized in that** the compacting is performed at least in part via the flexible membrane (36 ; 46) during the final polymerization under pressure.

7. A method according to any one of claims 1 to 4, in which a rigid fiber structure (50) is used, a drain (56) is placed between the fiber structure and the flexible membrane (54), and the resin contained in the drain is forced to penetrate into the fiber structure during the final polymerization under pressure.

8. A method according to claim 7, in which a fiber structure (50) is used that is stiffened by consolidation by partial densification.

9. A method according to any one of claims 1 to 8, in which a mold is used comprising a rigid support portion (32 ; 42) having a surface corresponding to the profile of a surface of the part to be made and against which the fiber structure is applied.

10. A method according to any one of claims 1 to 9, in which a pre-distillation treatment is performed on the resin composition before it is injected into the mold (22) in order to reduce the volatile material content thereof to a value of less than 25% by weight.

11. A method according to any one of claims 1 to 10, in which a resin is used that is selected from phenolic resins and furanic resins.

12. A method according to any one of claims 1 to 11, in which the resin composition also contains solid fillers.

13. A method according to any one of claims 1 to 12, in which, during the final stage of the polymerization step, the pressure is raised in the enclosure (20) in order to apply a pressure lying in the range 1 MPa to 2.5 MPa on the impregnated fiber structure.

## Patentansprüche

1. Verfahren zur Herstellung eines dicken Teils aus Verbundwerkstoff mit Faserverstärkung und Harzmatrix, umfassend die Schritte der:
- Bereitstellung einer Faserstruktur (30; 40; 50), die dazu bestimmt ist, die Verstärkung des herzustellenden Teils zu bilden,
- Anordnung der Faserstruktur in einer Form (22), von welcher wenigstens eine Wand durch eine flexible Membran (36; 46; 52, 54) gebildet ist,
- Injektion einer Harzzusammensetzung in die Form und
- Polymerisation des Harzes in der in einem Raum (20) angeordneten Form,
**dadurch gekennzeichnet, daß**:
- in die Form (22) eine Harzzusammensetzung injiziert wird, die einen Massenanteil an flüchtigen Bestandteilen von weniger als 25 % und eine Temperatur mit einem derartigen Wert aufweist, daß ihre Viskosität im Bereich zwischen 0,1 Pa.s und 0,3 Pa.s liegt, und
- der Schritt der Polymerisation eine Anfangsphase, im Laufe derer die Temperatur auf einen ersten Wert eingestellt wird und in der Form (22) ein Unterdruck aufgebaut wird, um erzeugte flüchtige Bestandteile abzuführen, sowie eine Abschlußphase umfaßt, im Laufe derer die Temperatur ausgehend von dem ersten Wert schrittweise erhöht wird und der Druck in dem Raum (20) erhöht wird, um ein Verbundwerkstoffteil zu erhalten, das eine Restvolumenporosität von weniger als 11 % aufweist.

2. Verfahren nach Anspruch 1, wobei eine Faserstruktur verwendet wird, die übereinander angeordnete und untereinander verbundene zweidimensionale Lagen umfaßt.

3. Verfahren nach Anspruch 2, wobei die zweidimensionalen Faserlagen durch Elemente, die durch die Lagen verlaufen, untereinander verbunden sind.

4. Verfahren nach Anspruch 2, wobei die zweidimensionalen Faserlagen durch ein organisches oder mineralisches Bindemittel untereinander verbunden sind.

5. Verfahren nach einem der Ansprüche 1 bis 3, wobei eine nicht starre Faserstruktur (30; 40) verwendet wird und ein Verdichten der Faserstruktur durchgeführt wird.

6. Verfahren nach Anspruch 5, **dadurch gekennzeichnet, daß** das Verdichten wenigstens teilweise mittels der flexiblen Membran (36; 46) während der abschließenden Druckpolymerisation durchgeführt wird.

7. Verfahren nach einem der Ansprüche 1 bis 4, wobei eine starre Faserstruktur (50) verwendet wird, zwischen der Faserstruktur und der flexiblen Membran (54) ein Drain (56) angeordnet wird und das in dem Drain enthaltene Harz dazu gezwungen wird, während der abschließenden Druckpolymerisation in die Faserstruktur einzudringen.

8. Verfahren nach Anspruch 7, wobei eine Faserstruktur (50), die durch Verfestigung mittels Teilverdichtung versteift ist, verwendet wird.

9. Verfahren nach einem der Ansprüche 1 bis 8, wobei eine Form verwendet wird, die ein starres Tragteil (32; 42) umfaßt, das eine Fläche aufweist, die dem Profil einer Fläche des herzustellenden Teils entspricht und an die die Faserstruktur angelegt wird.

10. Verfahren nach einem der Ansprüche 1 bis 9, wobei eine Behandlung zum Vordestillieren der Harzzusammensetzung vor ihrem Injizieren in die Form (22) durchgeführt wird, um den Massenanteil an flüchtigen Bestandteilen dieser auf einen Wert von unter 25 % zu senken.

11. Verfahren nach einem der Ansprüche 1 bis 10, wobei ein Harz verwendet wird, das aus den Phenol- und Furanharzen ausgewählt ist.

12. Verfahren nach einem der Ansprüche 1 bis 11, wobei die Harzzusammensetzung ferner feste Füllstoffe enthält.

13. Verfahren nach einem der Ansprüche 1 bis 12, wobei während der Abschlußphase des Polymerisationsschrittes der Druck in dem Raum (20) erhöht wird, um an die imprägnierte Faserstruktur einen Druck im Bereich zwischen 1 MPa und 2,5 MPa anzulegen.
